Europäisches Patentamt

European Patent Office

Office européen des brevets

(19)

(11) EP 1 139 596 A1

(12) EUROPEAN PATENT APPLICATION

(43) Date of publication:
04.10.2001 Bulletin 2001/40

(51) Int Cl.$^7$: H04J 11/00

(21) Application number: 01460019.1

(22) Date of filing: 29.03.2001

(84) Designated Contracting States:
AT BE CH CY DE DK ES FI FR GB GR IE IT LI LU
MC NL PT SE TR
Designated Extension States:
AL LT LV MK RO SI

(30) Priority: 30.03.2000 FR 0004016

(71) Applicant: Mitsubishi Electric Telecom Europe
(S.A.)
92741 Nanterre Cedex (FR)

(72) Inventor: Belaiche, Vincent Antoine Victor
34280 La Grand Motte (FR)

(74) Representative: Ballot, Paul
Cabinet Ballot,
4 Rue Général Hoche
56100 Lorient (FR)

(54) **Spread spectrum modulation method with discontinous spreading code, corresponding demodulation method, mobile station and base stations**

(57)    The present invention relates to a spread spectrum modulation using discontinuous spreading codes. The spectrum spreading codes used are sequences of chips wherein at least one chip has the value 0. These codes are called discontinuous spreading codes. Each of the chips with value 0 in the discontinuous spreading code generates a transmit power approaching zero for the corresponding transmitted signal.

The present invention is especially applicable in the domain of third generation telecommunication systems for mobile phones.

FIG.6

**Description**

The present invention relates to a method for modulating at least one symbol to be transmitted from a transmitter entity towards at least one receiver entity. The present invention is especially applicable in the field of third generation telecommunication systems for mobiles.

The 3GPP Group (3rd Generation Partnership Project) is a standardisation organisation, whose purpose is the standardisation of a third generation telecommunication system for mobiles. The technology retained by this system is the CDMA technology (Code Division Multiple Access).

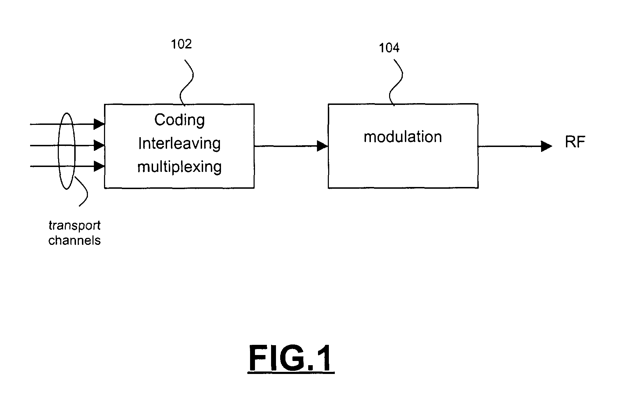

In the OSI model (Open System Interconnection) of the ISO (International Standardisation Organisation), a communication piece of equipment is modelled by a layered model comprising a protocol stack where each layer is a protocol providing a service to the layer of the upper level. The service provided by the layer of level 1 is called "transport channels". A transport channel can thus be understood as a data flow between the layers of level 1 and level 2 of the same piece of equipment. Fig. 1 shows the steps carried out in a transmitter operating with the CDMA technology. This transmitter is intended to supply signals to at least one base station. This transmission direction is hereinafter called uplink.

First of all, this transmitter performs a coding step referenced 102. During this step, the transmitter performs the following operations:

- channel coding of the transport channels,
- rate matching of the coded transport channels,
- interleaving of the coded transport channels,
- multiplexing of the coded transport channels to form a composite channel, and
- mapping the composite channel onto at least one physical channel.

This step is followed by a step 104 for modulating said at least one physical channel. Usually this modulation step comprises the following operations:

- a spread spectrum modulation operation for transforming the sequence of channel symbols into a sequence of chips, and
- a radio-frequency modulation operation for transforming a sequence of chips into a radio-frequency signal.

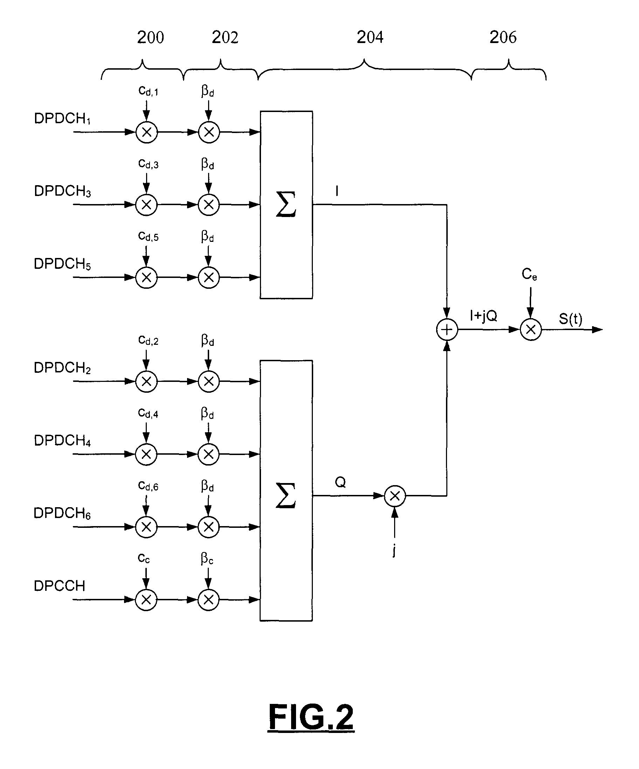

A spectrum-spreading operation on dedicated physical channels is shown in Fig. 2. Generally, a dedicated radio link comprises a physical control channel called DPCCH (Dedicated Physical Control Channel) and from 1 to 6 physical data channels called DPDCH (Dedicated Physical Data Channel) and numbered 1 to 6.

Only the physical channels of the DPDCH type carry a composite channel. Moreover, the physical channel of the DPCCH type makes it possible in particular for the receiver and the transmitter to adjust the radio transmission to variations of the radio channel.

Each physical channel is a sequence of binary channel symbols, each binary symbol being represented on line for example by a rectangular pulse. Thus, a bit with value 0 is transmitted under the form of a rectangular pulse of amplitude +1 while a bit with value 1 is transmitted under the form of a rectangular pulse of amplitude -1. It is to be noted that, on a same physical channel, all the symbols have the same duration $T_S$ equal to the duration of the corresponding rectangular pulse, and the value of the corresponding rate of symbols is $1/T_S$. The duration $T_S$ is specific to the physical channel and is equal to the product of a factor SF called the spreading factor and of a constant common period $T_C$ corresponding to the duration of a chip, the spreading factor being the number of chips per symbol. Thus,

$$T_S = SF \cdot T_C$$

The spreading factor is therefore specific to the physical channel. Nonetheless, in the uplink, all the physical channels of the DPDCH type of a same radio link have the same spreading factor. In addition, in the case of a composite channel of variable rate, the spreading factor of the physical channels of the DPDCH type can vary according to a period of 10ms called radio frame.

During this spectrum spreading operation, the signals corresponding to each of the physical channels, $DPDCH_1$ to $DPDCH_6$ and DPCCH, are first of all multiplied at a step referenced 200 by spreading code signals, respectively $C_{d,1}$ to $C_{d,6}$ and $C_c$. The spreading codes are periodic sequences of symbols called chips. The chips are generated according to a determining law which is the same in the receiver and in the transmitter of the radio link. The chips are binary symbols and are therefore also represented in line by rectangular pulses of amplitude +1 or -1. Each pulse has a duration $T_C$ and the period of the pulse sequence is equal to $T_S$. This sequence of pulses is therefore entirely defined by a list of SF amplitudes of value +1 or -1 giving the amplitudes of each chip from the first to the last for each symbol of the corresponding physical channel. In the following description, this list is considered to be the code itself, and the SF number of elements of the list is called the spreading factor of the spreading code.

The resulting signals from step 200 are then weighted at a step referenced 202 by a gain, $\beta_d$ for the DPDCH channel or channels and $\beta_c$ for the DPCCH channel, in such a way that the amplitude values +1 and -1 become $+\beta_d$ and $-\beta_d$ or $+\beta_c$ and $-\beta_c$ respectively.

After this weighting step, the resulting signals add up together in the two dimensions of the complex plan, at a step referenced 204. This step consists, first of all, of adding the signals from the DPDCH channels with even numbers to each other, and secondly, of adding the signals from the DPDCH channels with odd numbers and the DPCCH channel to each other and multiplying the resulting signal by j and, thirdly, of adding the two resulting signals. The complex signal thus obtained is then multiplied at a step 206 by a scrambling code $C_e$.

The spreading codes are also called channelisation codes since they allow channelling of the different physical channels. They belong to a set of codes called OVSF codes (Orthogonal Variable Spreading Factor) and are usually denoted $C_{ch,SF,n}$ where ch indicates that the code is a channelisation code (ch for channelisation), SF is the spreading factor of the code and n a number between 0 and SF-1 indicating the OVSF code number among the SF possible OVSF codes, the spreading factors of which is SF. The OVSF codes of spreading factor SF are given by the rows of a Hadamard matrix with SF rows and SF columns. The value of the spreading factor SF is a power of 2, thus $SF=2^N$.

In the description below, the matrix columns and rows are numbered respectively from top to bottom and from left to right, starting from zero. It should be recalled that the Kronecker product of two matrices A and B is denoted A $\otimes$ B and defined as follows:

Assume that A is a matrix with U rows and V columns, and B is a matrix with R rows and S columns

$$
A = \begin{bmatrix} a_{0,0} & \cdots & a_{0,V-1} \\ \vdots & \vdots & \vdots \\ a_{U-1,0} & \cdots & a_{U-1,V-1} \end{bmatrix} \quad B = \begin{bmatrix} b_{0,0} & \cdots & b_{0,S-1} \\ \vdots & \vdots & \vdots \\ b_{R-1,0} & \cdots & b_{R-1,S-1} \end{bmatrix}
$$

$$
A \otimes B = \begin{bmatrix} a_{0,0} \cdot B & \cdots & a_{0,V-1} \cdot B \\ \vdots & \vdots & \vdots \\ a_{U-1,0} \cdot B & \cdots & a_{U-1,V-1} \cdot B \end{bmatrix}
$$

$$
= \begin{bmatrix} a_{0,0} \cdot b_{0,0} & \cdots & a_{0,0} \cdot b_{0,S-1} & & a_{0,V-1} \cdot b_{0,0} & \cdots & a_{0,V-1} \cdot b_{0,S-1} \\ \vdots & \vdots & \vdots & \cdots & \vdots & \vdots & \vdots \\ a_{0,0} \cdot b_{R-1,0} & \cdots & a_{0,0} \cdot b_{R-1,S-1} & & a_{0,V-1} \cdot b_{R-1,0} & \cdots & a_{0,V-1} \cdot b_{R-1,S-1} \\ & \vdots & & & \vdots & & \vdots \\ a_{U-1,0} \cdot b_{0,0} & \cdots & a_{U-1,0} \cdot b_{0,S-1} & & a_{U-1,V-1} \cdot b_{0,0} & \cdots & a_{U-1,V-1} \cdot b_{0,S-1} \\ \vdots & \vdots & \vdots & \cdots & \vdots & \vdots & \vdots \\ a_{U-1,0} \cdot b_{R-1,0} & \cdots & a_{U-1,0} \cdot b_{R-1,S-1} & & a_{U-1,V-1} \cdot b_{R-1,0} & \cdots & a_{U-1,V-1} \cdot b_{R-1,S-1} \end{bmatrix}
$$

A matrix A $\otimes$ B with U·R rows and V·S columns is obtained. A $\otimes$ B is thus the matrix $[p_{i,j}]$ with:

$$\forall(u,v,r,s) \text{ such that } \begin{cases} 0 \le u < U \\ 0 \le v < V \\ 0 \le r < R \\ 0 \le s < S \end{cases}, \text{ then } p_{u \cdot R + r, v \cdot S + s} = a_{u,v} \cdot b_{r,s}$$

It is also recalled that the Kronecker product is associative and has the following property: if A and B are two matrices the rows of which are orthogonal one to another, then A ⊗ B is also a matrix the rows of which are orthogonal one to another.

The OVSF code $C_{ch,SF,n}$ is thus defined as being the row numbered $BR_{SF}(n)$ of the Hadamard matrix with SF rows and SF columns, which is by definition:

$$\underbrace{H \otimes \cdots \otimes H}_{N \text{ factors}}$$

where H equals

$$H = \begin{bmatrix} 1 & 1 \\ 1 & -1 \end{bmatrix},$$

N is an integer such as $SF = 2^N$ and $BR_{SF}$ is a permutation of the set $\{0,1,...,SF-1\}$ reverting the order of the bits of its elements when the latter are represented in the form of words of N bits.

Thus, $BR_{SF}$ is defined as follows:

$$\text{if } k = N - 1,$$

$$\forall(b_0, b_1, \cdots, b_k) \in \{0,1\}^{k+1} \qquad BR_{SF}\left(\sum_{i=0}^{i=k} b_i \cdot 2^i\right) = \sum_{i=0}^{i=k} b_{k-i} \cdot 2^i$$

Moreover, since H is a matrix the rows of which are orthogonal one to another, $H \otimes \cdots \otimes H$ has the same property. The OVSF codes $C_{ch,SF,0}$, $C_{ch,SF,1}$, ..., $C_{ch,SF,SF-1}$ thus form an $R^{SF}$ orthogonal base, $R^{SF}$ being the canonical vector space of SF dimensions whose underlying field is the set of real numbers. This property is very interesting since it makes it possible to isolate the physical channels $DPDCH_1$ to $DPDCH_6$ and DPCCH from each other. Thus OVSF codes orthogonal one to another are assigned to the channels $DPDCH_1$ to $DPDCH_6$ and DPCCH so that said channels are orthogonal one to another.

$C_{ch,SF,n}$ can also be defined recursively as follows:

- $C_{ch,1,0} = [1]$ is set,
- for every spreading factor $SF = 2^N$ and for every n in $\{0,1,...,SF-1\}$ then:

  - $C_{ch,2 \cdot SF,2 \cdot n}$ can be obtained by concatenating $C_{ch,SF,n}$ to itself, thus

  $$C_{ch,2 \cdot SF,2 \cdot n} = [1\ 1] \otimes C_{ch,SF,n}$$

  - $C_{ch,2 \cdot SF,2 \cdot n+1}$ can be obtained by concatenating $-C_{ch,SF,n}$ to $C_{ch,SF,n}$ thus

  $$C_{ch,2 \cdot SF,2 \cdot n+1} = [1\ -1] \otimes C_{ch,SF,n}$$

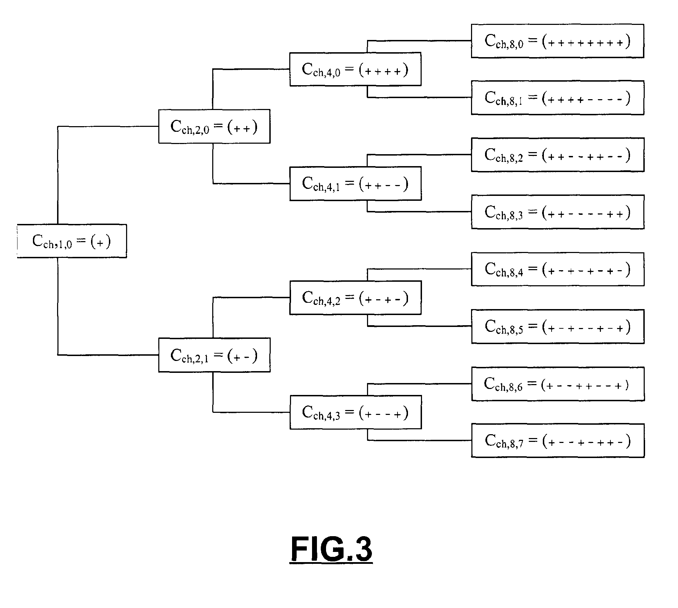

This recursion relation allows the classification of the OVSF codes in a tree, called an OVSF tree, in which each OVSF code $C_{ch,SF,n}$ with spreading factor SF and with number n is the ancestor of two OVSF codes $C_{ch,2\cdot SF,2\cdot n}$ and $C_{ch,2\cdot SF,2\cdot n+1}$ placed, by convention, on the upper and lower branches respectively when the tree grows horizontally from left to right. As an example, the OVSF codes with a spreading factor between 1 and 8 are shown in Fig. 3 where, for simplicity, the chips with amplitude +1 and -1 are marked "+" and "-" respectively.

This tree classification presents an interest since it illustrates perfectly the idea of orthogonality in the wide meaning of the term. In fact, the orthogonality between two codes with the same spreading factor SF, called orthogonality in the strict meaning, is quite simply the orthogonality of the two corresponding vectors in the vectorial space $R^{SF}$. On the other hand, the idea of orthogonality in the wide meaning is used for two codes A and B with different spreading factors. For example, the code A is considered to have the smallest spreading factor. A and B are defined to be orthogonal in the wide meaning if B = U⊗V, where V designates a code with the same spreading factor as code A and is orthogonal in the strict meaning to code A. Orthogonality in the wide meaning is verified if neither of the two codes is a descendant of the other in the OVSF tree. In fact, all the descendants of code A can be written under the form C⊗A.

Thus, if $PhCH_A$ and $PhCH_B$ are symbol sequences to be spread respectively by A and B, then the respective sequences after spreading are $PhCH_A⊗A$ and $PhCH_B⊗B = (PhCH_B⊗U) ⊗ V$. After spreading these sequences can also be obtained by spreading $PhCH_A$ and $(PhCH_B⊗U)$ respectively by codes A and V which are orthogonal in the strict meaning. Thus, there is, from the point of view of separation of physical channels, an equivalence between orthogonality in the wide meaning and the strict meaning.

The allocation rule for OVSF codes of physical channels is generally as follows:

- the DPCCH channel always has a spreading factor equal to 256 and its spreading code is $C_{ch,256,0}$ ;
- when there is only one DPDCH channel, with spreading factor SF, its OVSF code is $C_{ch,SF,k}$, where k = SF/4;
- when there is more than one DPDCH channel, the spreading factor of the DPDCH channels is then equal to 4, and the OVSF code of the channel $DPDCH_n$ is $C_{ch,4,k}$, with k = 1 if n∈{1,2}, k = 3 if n∈{3,4}, and k = 2 if n∈{5,6}.

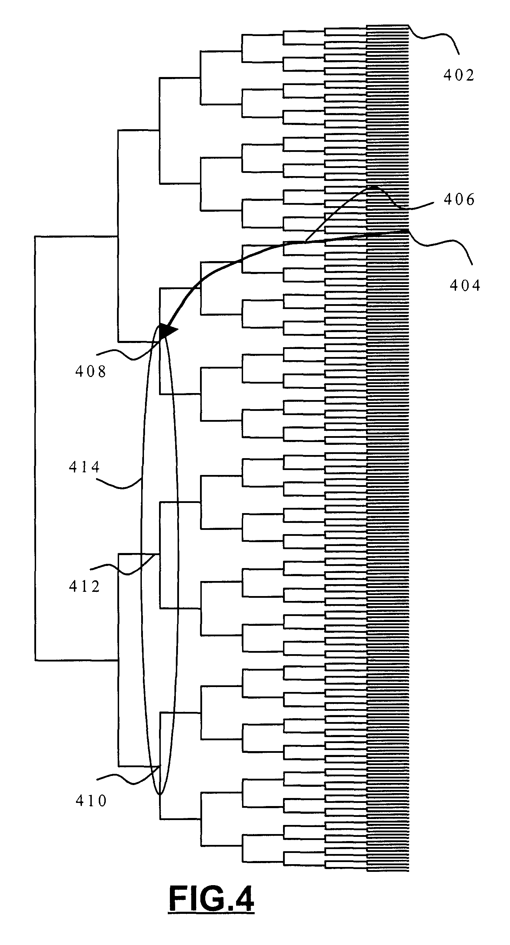

If the rate of the composite channel is gradually increased, the allocation of OVSF codes takes place as illustrated in Fig.4. The DPCCH channel is spread with Q phase of the code $C_{ch,256,O}$ referenced 402. Initially, the code $C_{ch,256,64}$ referenced 404 is allocated to a unique DPDCH channel, this code then being used with I phase. Then as the rate increases, the value of the spreading factor assigned to the DPDCH channel is reduced. This reduction of the spreading factor consists of re-climbing the OVSF tree along the arrow referenced 406 until arrival at the code $C_{ch,4,1}$ referenced 408. At this stage, the spreading factor cannot be reduced since its minimum value is then equal to 4. If the rate increases further, the two phases, I and Q, of the code are then used. If it increases still further, it is then necessary to use several codes in parallel. The codes used are then the codes contained in the ellipse referenced 414. The rule is not to use a new code unless the two phases of the codes already allocated are used. Thus, if the rate increases further, the two I and Q phases of the code $C_{ch,4,1}$ referenced 408 are used first of all, then the I phase of the code $C_{ch,4,3}$ referenced 410, then its Q phase, then the I phase of the code $C_{ch,4,2}$ referenced 412 and then the Q phase of the latter. When the two phases of these three codes are used, it is no longer possible to increase the rate of the composite channel.

The OVSF code $C_{ch,SF,n}$ can also be defined as a matrix with 1 row and SF columns, defined by the following formula:

$$C_{ch,SF,n} = W_0⊗W_1⊗\cdots⊗W_{N-1} \tag{1}$$

with N such that $SF=2^N$, and for every integer i from 0 to N-1 such that

$$n = \sum_{i=0}^{i=\log_2(SF)-1} b_i \cdot 2^i , \quad :$$

- $W_i = [1\ 1]$ if $b_i = 0$, and
- $W_i = [1\ -1]$ if $b_i = 1$.

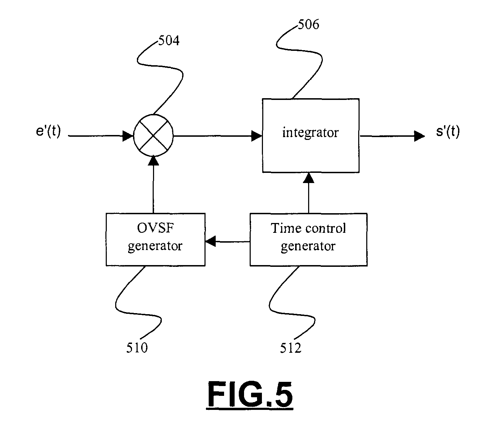

The preceding relation (1) is interesting for building receivers. In fact, most receivers typically contain at least one device for correlating a sequence of samples with an OVSF code in such a way as to despread a signal e'(t) specific to a propagation path. A diagram of the principle of such a correlation device, hereinafter called despreader, is given in Fig. 5. The signal e'(t) is multiplied in a multiplier 504 by an OVSF code provided by an OVSF code generator referenced 510. The generator is triggered by a time control generator referenced 512. The time control generator 512 is instructed to generate a pulse at the beginning of each symbol. Thus, each time the OVSF code generator receives a pulse, it starts generation of the OVSF code again at the beginning. The signal multiplied by the OVSF code is then supplied to an integrator referenced 506. At each pulse of the time control generator 512, the content of the summing register of the integrator is delivered at the output of the correlation device. The signal s'(t) outputted from the integrator 506 constitutes the despreading signal. The operation carried out by the despreader is usually called correlation since the latter correlates the sequence of chips of the symbol received with the sequence of chips of the spreading code.

The operation of such a despreader presupposes knowledge of the OVSF code of the signal to be despread. In fact, the rate of the DPDCH physical channel may not be constant and may vary at most every radio frame that is every 10ms. The spreading factor, and thus the OVSF code, then varies inversely to the rate. The spreading factor of this code can then be determined thanks to a piece of information called TFCI (Transport Format Combination Indicator) transmitted by the corresponding DPCCH channel. This piece of information is interleaved over the radio frame (10ms) and therefore cannot be decoded before the end of this radio frame. It is thus necessary to decode the spreading factor at the end of each radio frame. In order to do this, it is possible to design a base receiver comprising means for storing the chip samples of a radio frame (that is 38400 samples when the rate is 3.84 megachips per second). Such an architecture has two major disadvantages:

- it introduces a processing delay of 10ms (time of the radio frame) since it is necessary to wait for the end of the radio frame before beginning to demodulate;
- it also needs a big memory to memorise the chip samples of the radio frame.

However, a more sophisticated receiver exists which can begin despreading without waiting for the end of the radio frame. Hereinafter this receiver is called hierarchical despreading receiver. In fact, if a code $C_{ch,SF,n}$ such that $C_{ch,SF,n} = W_0 \otimes W_1 \otimes \cdots \otimes W_{\log_2(SF)-1}$ is considered, it can be decomposed as follows:

$$C_{ch,SF,n} = U \otimes V$$

$$\text{with}$$

$$V = W_{\log_2\left(\frac{SF}{SF0}\right)} \otimes W_{\log_2\left(\frac{SF}{SF0}\right)+1} \otimes \cdots \otimes W_{\log_2(SF)-1}$$

$$\text{and}$$

$$U = W_0 \otimes W_1 \otimes \cdots \otimes W_{\log_2\left(\frac{SF}{SF0}\right)-1}$$

where SF0 is the minimum value of the spreading factor of the DPDCH channels of the radio link under consideration.

However, V is a known sequence, of length SFO, independent of the spreading factor SF of the DPDCH channels and thus of rate variations. The sophisticated receiver can therefore carry out the despreading operation in two stages. Firstly, it carries out a first despreading with the code V. This operation takes place during the radio frame and produces a sequence of "intermediary chips", each corresponding to the correlation of code V with a time segment covering a fraction $\frac{SFO}{SF}$ of the received symbol. At this stage of the despreading operation, the number $\frac{SF}{SFO}$ of intermediary chips per symbol is not yet known. The code U is then decoded at the end of the radio frame by means of the TFCI information. A second despreading is then performed with the code U by correlating the sequences of intermediary chips of each symbol with the code U.

This two-stage despreading operation is satisfactory in terms of processing time since part of the processing is carried out during the radio frame and in terms of memory since there are SF0 times fewer intermediary chips than chips.

Nonetheless, a third generation system has to guarantee a given quality of service for each transport channel. This quality of service is determined in particular by the maximum bit error rate, or BER of this transport channel. This BER is a function of the signal to interference ratio, called SIR (Signal to Interference Ratio), in reception for the physical channels. The higher the SIR ratio, the lower the bit error rate. Thus it is best to maintain the SIR ratio above a target value denoted $SIR_{target}$. This is carried out by a feedback loop in the radio link: the SIR ratio is measured periodically in the receiver at each time slot (about every 666.67µs); when the SIR ratio measured is lower than the $SIR_{target}$ value, the network sends a request in the corresponding time slot asking the mobile station to increase its transmit power of one step $\Delta_{TPC}$ (usually $\Delta_{TPC}$ = 1dB).

Moreover, one should not forget that, when the mobile station raises its transmit power, it causes reception interference for other mobile stations. In fact, in CDMA technology, several mobile stations can transmit on the same carrier frequency within the same cell. Each mobile station is thus a source of interference for the other mobile stations transmitting on the same carrier frequency. The result is that, when one mobile station transmits with more power, it reduces the reception SIR ratio of the other mobile stations since it creates more interference. Also, each time the SIR ratio measured by the network exceeds the value $SIR_{target}$, the network sends back a power control order to the corresponding mobile station requesting it to decrease its transmit power of one step $\Delta_{TPC}$.

Thus a system operating on the CDMA technology needs, in the uplink, the reception SIR ratio of each mobile station to be maintained in the neighbourhood of the value $SIR_{target}$. The reception SIR ratio for a mobile station depends particularly on the transmit power of the signal received and the path loss. Thus, in order to compensate for the respective path losses, the network orders the distant mobile stations to transmit with higher power than those close to the base station. If this requirement is not respected, this will cause a "near far effect" problem, that is to say that the close mobile stations transmit too powerfully and disturb reception from the distant mobile stations. To avoid this problem, it is necessary for the transmit power dynamic of mobile stations to be high, in magnitude order of 80dB. In areas where there is a high density of mobile stations (for example a station passenger hall or a shopping mall), the network uses micro-cells or pico-cells in order to reduce the spatial period for reutilization of the radio spectrum, and thus to accept more mobile stations per unit surface. In view of the great number of base stations, it is difficult to prevent mobile stations from approaching the base station since the site of the base station does not always permit it. In particular, it is not always possible to place the antenna of the base station on top of a mast which is sufficiently high. Thus, the "near far effect" problem becomes critical when mobile stations coming close to a base station are unable to decrease their transmit power, because they are already at their minimum transmit power.

A purpose of the invention is to reduce the phenomenon of the "near far effect" in a telecommunication system using the CDMA technology by applying a new modulation, called spread spectrum modulation with discontinuous spreading code, aiming at reducing the minimum transmit power of the mobile stations.

Another purpose of the invention is to propose a spread spectrum modulation allowing preservation of the known advantages of the OVSF codes, that is:

- orthogonality in the wide meaning, and
- the possibility of carrying out hierarchical despreading.

Thus, the subject of the invention is a method for modulating at least one symbol to be transmitted from a transmitter entity towards at least one receiver entity, said at least one symbol being issued from at least one physical channel, said method comprising :

- a step for assigning a spectrum spreading code to each of said at least one physical channel,
- a step for generating at least one spectrum spreading code, said at least one spectrum spreading code being taken from a set of orthogonal spreading codes with variable spreading factor, and
- a step for multiplying each of said at least one symbol of each of said at least one physical channel by the generated spectrum spreading code assigned to the physical channel under consideration,

characterised in that said step for generating at least one spectrum spreading code consists of generating at least one spectrum spreading code comprising a sequence of chips wherein at least one chip has the value 0, each of the chips with value 0 included within a spectrum spreading code thus generated, then called discontinuous spectrum spreading code, creating, for the physical channel to which said discontinuous spectrum spreading code is assigned, a transmit power in the vicinity of zero for the corresponding transmitted signal.

The chips with value 0 contribute to reducing the average transmit power of the symbols transmitted by the transmitter entity. The generated sequence of chips further comprises chips with value -1 or 1.

According to one particular embodiment in which at least two spectrum spreading codes are included within a list of spectrum spreading codes which is possibly structured according to a so-called tree structure, the method includes a step for selecting a spectrum spreading code to be assigned within said list, the selection of said spectrum spreading code to be assigned being carried out according to at least one serial number specific to the physical channel to which said selected spectrum spreading code is to be assigned, and a step for permuting said at least two spectrum spreading codes within said list, said permutation step consisting of carrying out at least one permutation of said at least two spectrum spreading codes within said list, each of said at least one permutation being carried out in a pseudo-random fashion according to a predetermined period, called permutation period. Said selection and assignment steps are repeated after at least one permutation and, after each of said assignment steps, said generation step stops generating the spectrum spreading code assigned before the permutation under consideration, and generates the spectrum spreading code assigned after the permutation under consideration.

This method can be implemented after the reception by said transmitter entity of a request message, called first request message, transmitted by said at least one receiver entity, and deactivated in response to the reception by said transmitter entity of a request message, called second request message, transmitted by said at least one receiver entity.

Another subject of the invention is a device for modulating at least one symbol to be transmitted from a transmitter entity towards at least one receiver entity, said at least one symbol being issued from at least one physical channel, said device comprising:

- means for assigning a spectrum spreading code to each of said at least one physical channel,
- means for generating at least one spectrum spreading code, said at least one spectrum spreading code being taken from a set of orthogonal spreading codes with variable spreading factor, and
- means for multiplying each of said at least one symbol of each of said at least one physical channel by the generated spectrum spreading code assigned to the physical channel under consideration,

characterised in that said means for generating at least one spectrum spreading code generate at least one spectrum spreading code comprising a sequence of chips in which at least one chip has the value 0, each of the chips with value 0 included within a spectrum spreading code thus generated, then called discontinuous spectrum spreading code, creating, for the physical channel to which said discontinuous spectrum spreading code is assigned, an transmit power approaching zero for the corresponding transmitting signal.

Another subject of the invention is a mobile station comprising means for transmitting at least one physical channel, each of said at least one physical channel carrying at least one symbol, and a modulation device such as mentioned above.

A further subject of the invention is a method for demodulating at least one symbol received by a receiver entity, said at least one symbol being issued from at least one modulated physical channel, said method comprising:

- a step for assigning a spectrum despreading code to each of said at least one modulated physical channel, said spectrum despreading code corresponding to the spectrum spreading code being used for modulating a physical channel to be modulated and to be transmitted,
- a step for generating at least one spectrum despreading code, said at least one spectrum despreading code being taken from a set of orthogonal despreading codes with variable despreading factor, and
- a step for correlating each of said at least one symbol of each said at least one modulated physical channel, said correlation step consisting of correlating the considered symbol with the generated spectrum despreading code assigned to the modulated physical channel under consideration,

characterised in that said step for generating at least one spectrum despreading code consists of generating at least one spectrum despreading code comprising a sequence of chips wherein at least one chip has the value 0.

Another subject of the invention is a device for demodulating at least one symbol received by a receiver entity, said at least one symbol being issued from at least one modulated physical channel, said device comprising :

- means for assigning a spectrum despreading code to each of said at least one modulated physical channel, said spectrum despreading code corresponding to the spectrum spreading code being used for modulating a physical channel to be modulated,
- means for generating at least one spectrum despreading code, said at least one spectrum despreading code being taken from a set of orthogonal despreading codes with variable despreading factor, and
- means for correlating each of said at least one symbol of each of said at least one modulated physical channel with the generated spectrum despreading code assigned to the modulated physical channel under consideration,

characterised in that said means for generating at least one spectrum despreading code generate at least one spectrum despreading code comprising a sequence of chips wherein at least one chip has the value 0.

Finally, the invention also relates to a base station comprising means for receiving at least one modulated physical channel, each of said at least one modulated physical channel carrying at least one symbol, and a demodulation device as described above.

The invention will be better understood after reading the following detailed description drawn up with reference to the drawings in the appendices.

Fig. 6 is a partial quaternary tree structure of continuous and discontinuous OVSF codes.

Fig. 7 is a partial quaternary tree structure of continuous and discontinuous OVSF codes showing the relation of orthogonality between the codes.

Fig. 8 is a diagram illustrating, for a given example, the variation of two parameters $SF_{dadd}$ and $SF_e$ as a

function of the spreading factor.

Fig. 9 is an example of a binary tree of discontinuous OVSF codes.

Fig. 10 is a diagram showing the discontinuous codes assigned when the radio link bit rate increases.

According to the invention, besides the classic OVSF codes called continuous OVSF codes, OVSF codes called discontinuous OVSF codes are used. Thus, the sets of OVSF codes used for spectrum spreading are extended according to the invention to the discontinuous OVSF codes. Hereinafter every continuous or discontinuous OVSF code of this set is called extended OVSF code. The extended OVSF codes with a spreading factor of $SF=2^N$ are given by the rows of a matrix with $4^N$ rows and $2^N$ columns:

$$\underbrace{\begin{bmatrix} 1 & 1 \\ 1 & -1 \\ 1 & 0 \\ 0 & 1 \end{bmatrix} \otimes \cdots \otimes \begin{bmatrix} 1 & 1 \\ 1 & -1 \\ 1 & 0 \\ 0 & 1 \end{bmatrix} \otimes \begin{bmatrix} 1 & 1 \\ 1 & -1 \\ 1 & 0 \\ 0 & 1 \end{bmatrix}}_{N \text{ Factors}} \qquad (2)$$

The discontinuous OVSF codes are the extended OVSF codes comprising at least one zero. According to formula (2), there are $SF^2$ extended OVSF codes including SF continuous OVSF codes and $(SF^2-SF)$ discontinuous OVSF codes for the spreading factor SF. For a given spreading factor SF, the extended OVSF codes are numbered from 0 to $SF^2-1$ and the extended OVSF code with spreading factor SF and number n is denoted $D_{SF,n}$. By definition:

$$D_{SF,n} = W_0 \otimes W_1 \otimes \cdots \otimes W_{N-1} \qquad (3)$$

With, for every i integer from 0 to N-1 and $q_i \in \{0,1,2,3\}$ such that

$$n = \sum_{i=0}^{N-1} q_i \cdot 4^i , \quad :$$

- $W_i = [1\ 1]$ if $q_i = 0$,
- $W_i = [1\ -1]$ if $q_i = 1$,
- $W_i = [1\ 0]$ if $q_i = 2$, and
- $W_i = [0\ 1]$ if $q_i = 3$.

The discontinuous OVSF codes are thus lists of chips with value +1, 0 or -1. The number of non zero elements of a discontinuous OVSF code is called the effective spreading factor $SF_e$ of this code, and the ratio of the spreading factor SF to the effective spreading factor $SF_e$ is called the discontinuity factor $SF_d$ ($= \frac{SF}{SF_e}$). A discontinuous OVSF code has an effective spreading factor smaller than its spreading factor whereas, for a continuous OVSF code, these two factors are equal.

The utilisation of a discontinuous OVSF code makes it possible to reduce the mean transmit power. In fact, only the chips with value +1 or -1 influence the mean transmit power. Thus, with equal peak powers, the mean transmit power for a discontinuous OVSF code with spreading factor SF and discontinuity factor $SF_d$, is smaller than that transmitted for a continuous OVSF code with the same spreading factor, the reduction of the mean power then being a ratio $1/SF_d$.

Orthogonality in the wide meaning of extended OVSF codes can be defined as follows. That is $D_{SF1,n1} = W_0 \otimes W_1 \otimes \cdots \otimes W_{\log 2(SF1)-1}$ and $D_{SF2,n2} = W'_0 \otimes W'_1 \otimes \cdots \otimes W'_{\log 2(SF2)-1}$ two extended OVSF codes with respective spreading factors SF1 and SF2 and respective numbers n1 and n2. It is assumed, without restriction, that SF1>SF2. Then, $D_{SF1,n1}$ and $D_{SF2,n2}$ are called orthogonal in the wide meaning if there exists at least one index n in $\{0,1,...,\log_2(SF2)-1\}$ such that $W'_n$ and

$$W_{\log_2\left(\frac{SF1}{SF2}\right)+n}$$

are orthogonal.

According to the invention, the spread spectrum modulation method consists of assigning an extended spreading code to each physical channel of the radio link, then generating these codes and finally multiplying each symbol of the physical channels by the extended spreading code which has been assigned to it. Advantageously, the assignment step precedes the generation step in such a way as to generate only the necessary spreading codes, that is to say, the spreading codes which are assigned. In an embodiment of the invention, a code generator is capable of generating the code after being set by a concise information identifying the code, for example the number (SF,n) of the code. The assignment then consists of attributing a code number to each physical channel, while the generation consists of producing the sequence of chips of this code.

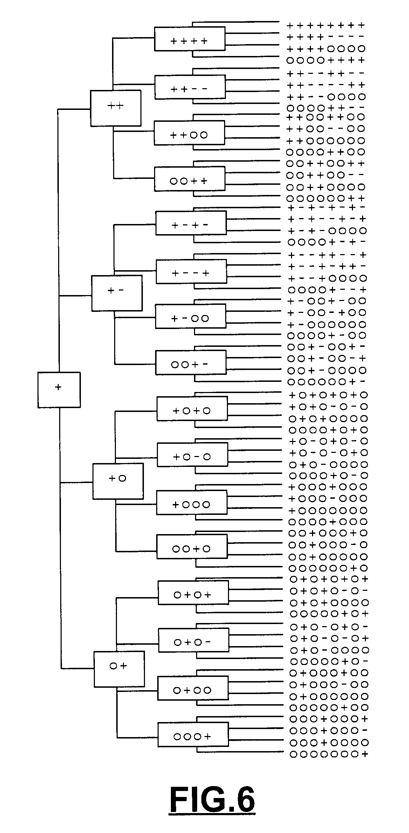

The extended OVSF codes can be classified according to a tree structure, as shown in Fig. 6. In order to improve the readability of the figure, the chips +1, 0 and -1 are represented by "+", "o" and "-" respectively. Every node N in the tree is a code with four child codes corresponding respectively, from top to bottom, to the four rows of the matrix

$$\begin{bmatrix} 1 & 1 \\ 1 & -1 \\ 1 & 0 \\ 0 & 1 \end{bmatrix} \otimes N.$$

The tree classification thus obtained no longer permits visualisation in such a simple way of the codes orthogonal to each other in the wide meaning. Certainly, it remains necessary for the two codes to be neither the ancestor nor the descendant of one another for them to be orthogonal, but this restriction is not sufficient.

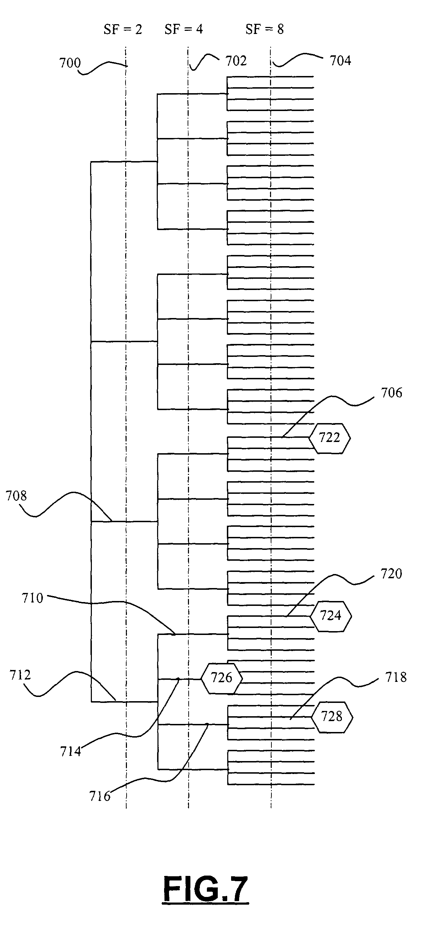

However, a method exists making it possible to determine, from this tree, whether two codes are orthogonal to each other in the wide meaning. This method is illustrated by Fig. 7. The tree of codes represented in this figure is identical to that in Fig. 6 except for the fact that the values of the codes are not indicated in order not to overload it. Dotted horizontal axes cut the branches of the tree. Each axis represents a spreading factor SF and cuts the tree in $SF^2$ branches. Thus, the spreading factors SF = 2, 4 and 8 are represented respectively by the vertical axes referenced 700, 702 and 704. The branches of the tree are represented by groups of four, each group being formed of four branches issuing from the same node. The first two branches of each group correspond respectively to the factors [1 1] and [1 -1] orthogonal to each other, the term factor being used here referring to the Kronecker product. In the same way, the last two branches of each group correspond respectively to the factors [1 0] and [0 1] orthogonal to each other. Thus, for the two codes A and B to be orthogonal, it is necessary for at least one of the axes 700, 702 and 704 to cut the two paths of the tree leading from the root to the two codes A and B at the level of two branches corresponding to factors orthogonal to each other, that is to say either [1 1] and [1 -1], or [1 0] and [0 1]. This condition is necessary and sufficient.

This condition is illustrated through the examples of codes represented in Fig. 7. Four codes marked by grey hexagonal boxes and referenced 722, 724, 726 and 728, are represented in Fig. 7. The codes 724 and 728 are orthogonal to each other since the axis 704 cuts their respective paths at the level of the branches referenced 720 and 718 respectively, corresponding to factors [1 1] and [1 -1] orthogonal to each other.

In the same way, code 722 is orthogonal to each of the codes 724, 726 and 728 since the axis 700 cuts the path associated to code 722 at the level of the branch referenced 708 and the paths associated to codes 724, 726 and 728 at the level of the branch referenced 712; and these two branches correspond respectively to the factors [1 0] and [0 1] orthogonal to each other.

On the other hand, codes 726 and 728 are not orthogonal to each other. In fact, the common axes cutting their respective paths are the axes 700 and 702. Axis 700 cuts the two paths at the level of the same branch referenced 712 corresponding to the factor [0 1] which is not orthogonal to itself. As for axis 702, it cuts the paths of these two codes respectively at the level of the branches referenced 714 and 716 corresponding to factors [1 -1] and [1 0] which are not orthogonal to each other. This tree thus makes it possible to determine in a simple way the continuous or discontinuous OVSF codes orthogonal to each other.

The corresponding demodulation method consists of assigning to each modulated physical channel a despreading spectrum code corresponding to the extended spectrum spreading code used for the modulation, generating said extended spectrum despreading code and then carrying out a step for correlating each symbol of the modulated physical channel by the generated extended spectrum despreading code.

Discontinuous OVSF codes make it possible to carry out a hierarchical despreading since, like the continuous OVSF codes, they correspond to Kronecker products of shorter elementary codes, in this case the factors [1 1], [1 -1], [1 0] and [0 1]. This hierarchical despreading is generally carried out when the spreading factor of a physical channel varies. During this despreading, the spectrum despreading code to be assigned to the physical channel to be demodulated is selected from within a list associated to said modulated physical channel with variable spreading factor. This list comprises a unique spectrum despreading code for each of said possible spreading factors of said modulated physical channel. In this list, each spectrum despreading code is the result of the Kronecker product of a factor V common to all of the spectrum despreading codes of the list under consideration, called first factor, and of a factor U specific to the spectrum despreading code under consideration, called second factor. Thus the hierarchical despreading consists of carrying out:

- a step for generating the first factor V;
- a step for correlating at least one time segment relative to each symbol of said physical channel modulated with the first factor, in such a way as to obtain a sequence of intermediary chips for each symbol; this step is called the first correlation step;
- a step for determining the second factor U, and
- a step for correlating each symbol of the sequence of corresponding intermediary chips obtained with the second factor U; this step is called the second correlation step.

As indicated above, this hierarchical despreading permits reduction of the time of the demodulation step.

A supplementary advantage of despreading with a discontinuous OVSF code lies in the fact that it is simpler to be performed that despreading with an OVSF code. In fact, in this case, the number of additions per spread symbol carried out by the integrator 506 of the despreading device of Fig. 5 is equal to the effective spreading factor whereas, before, it was equal to the spreading factor. The number of additions is thus divided by $SF_d$, thus at least by two. This is due to the fact that despreading with an elementary code [1 0] or [0 1] in fact consists of a decimation by two arid includes no addition.

The device executing this demodulation method is advantageously placed in a base station of a third generation telecommunication system.

The mobile station of a telecommunication system carries out measurements in a known fashion and then sends the result of these measurements to the network. This sending can be done periodically or can be triggered by a given event of any sort. In particular, the mobile station carries out measurements of transmit power of a signal transmitted for a given period. It then sends a message, called a transmit power information message, comprising the result of the measurement of its power. The network can then detect when the mobile station is approaching its minimum transmit power. Furthermore, according to the invention, when the power P transmitted by the mobile station falls below a first threshold P1, the network sends the mobile station a first request message asking it to carry out a discontinuous spectrum spreading, that is to assign a discontinuous spreading code to at least one of the physical channels. This request can also be used to assign a discontinuous spreading code to all the physical channels of the radio link. Inversely, when the power transmitted by the mobile station passes above a second threshold P2, where P2 is higher than P1, the network, by means of a second request message, demands that the mobile station uses continuous OVSF codes once again, or at least a majority of continuous OVSF codes.

Thus, at the demand of the network, the mobile station transmits according to one of the following modes:

- a normal spreading mode, using continuous OVSF codes, or
- a discontinuous spreading mode using at least one discontinuous OVSF code.

The use of two thresholds P1 and P2 advantageously permits avoiding a "ping-pong" between the two modes, that is to say changing the mode too often, which causes an overload of the necessary signalling.

According to one preferred embodiment of the invention, the mobile station uses, among the discontinuous OVSF codes defined by the rows of the matrix given by Formula (2), discontinuous OVSF codes which are row vectors of the matrix with $2^N$ rows and $2^N$ columns resulting from the Kronecker product

$$H_1 \otimes H_2 \otimes H_3 \tag{4}$$

where

- $H_1$ is the result of the Kronecker product

$$\begin{bmatrix} 1 & 0 \\ 0 & 1 \end{bmatrix} \otimes \cdots \otimes \begin{bmatrix} 1 & 0 \\ 0 & 1 \end{bmatrix}$$

comprising $\log_2 (SF_{dadd})$ factors

$$\begin{bmatrix} 1 & 0 \\ 0 & 1 \end{bmatrix},$$

- $H_2$ is the result of the Kronecker product

$$\begin{bmatrix} 1 & 1 \\ 1 & -1 \end{bmatrix} \otimes \cdots \otimes \begin{bmatrix} 1 & 1 \\ 1 & -1 \end{bmatrix}$$

comprising $\log_2(SF_e)$ factors

$$\begin{bmatrix} 1 & 1 \\ 1 & -1 \end{bmatrix},$$

and
- $H_3$ is the result of the Kronecker product

$$\begin{bmatrix} 1 & 0 \\ 0 & 1 \end{bmatrix} \otimes \cdots \otimes \begin{bmatrix} 1 & 0 \\ 0 & 1 \end{bmatrix}$$

comprising $\log_2(SF_{dmin})$ factors

$$\begin{bmatrix} 1 & 0 \\ 0 & 1 \end{bmatrix}.$$

The set of row vectors defined by formula (4) is a sub-set of the set of row vectors defined by formula (2). In this formula, $SF_{dmin}$ represents the minimum discontinuity factor and constitutes a discontinuous spreading mode parameter not depending on the rate of the physical channel, contrary to SF (which depends on the rate of the physical channel). $SF_e$ is the effective spreading factor of the physical channel. $SF_{dadd}$ is defined by the formula $SF_d = SF_{dadd} \cdot SF_{dmin}$ where $SF_d$ is the discontinuity factor of the physical channel. Moreover, the physical channel has minimum and maximum effective spreading factors, respectively called $SF_{emin}$ and $SF_{emax}$, which are also discontinuous spreading mode parameters. Thus, the discontinuous spreading mode is defined by three parameters $SF_{dmin}$ and $SF_{emin}$ and $SF_{emax}$.

In discontinuous spreading mode, the minimum spreading factor is $SF_{min} = SF_{dmin} \cdot SF_{emin}$. Thus, when the spreading factor SF is increased starting from $SF_{min} = SF_{dmin} \cdot SF_{emin}$, the variables $SF_d$, $SF_{dadd}$ and $SF_e$ of formula (4) can be defined as a function of SF and are given by the following formulae:

$$SF_e = \min\left\{ \frac{SF}{SF_{dmin}}, SF_{emax} \right\}$$

$$SF_{dadd} = max\left\{1, \frac{SF}{SF_{d\,min} \cdot SF_{e\,max}}\right\}$$

$$SF_d = max\left\{SF_{d\,min}, \frac{SF}{SF_{e\,max}}\right\}$$

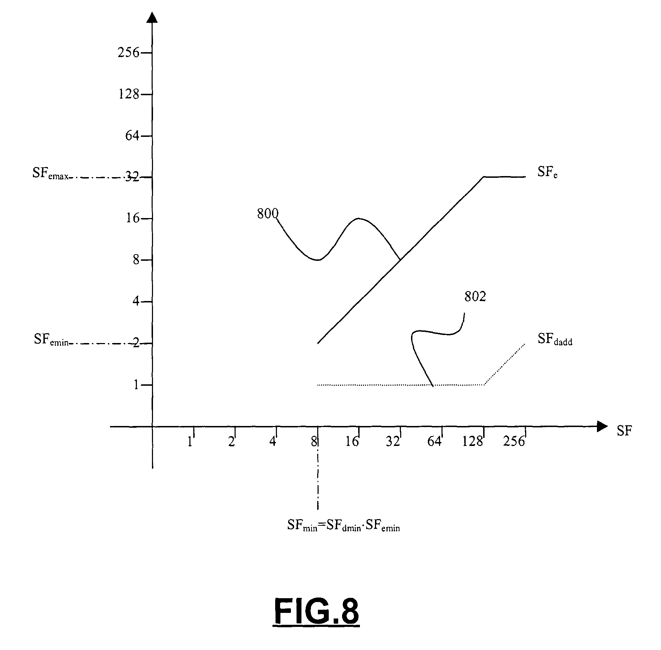

Thus, as long as the spreading factor SF is less than or equal to $SF_{dmin} \cdot SF_{emax}$, then $SF_d$ equals $SF_{dmin}$ and $SF_e$ equals $SF/SF_{dmin}$. As soon as SF is greater than $SF_{dmin} \cdot SF_{emax}$, then $SF_d$ equals $SF/SF_{emax}$ and $SF_e$ equals $SF_{emax}$. The variations of the variables $SF_e$, $SF_d$ and $SF_{dadd}$ are illustrated in logarithmic scale respectively by the curves 800, 802 and 804 on Fig. 8 for $SF_{dmin}=4$, $SF_{emin}=2$ and $SF_{emax}=32$.

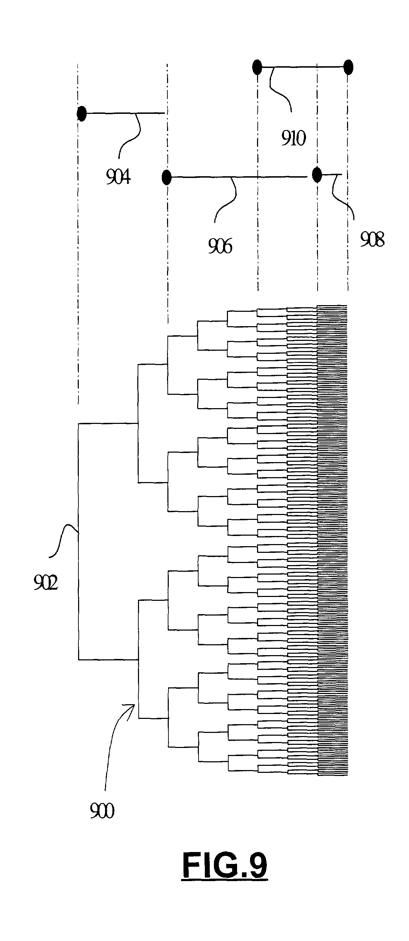

Formula (4) is a Kronecker product of matrices with two rows and two columns. Thus when the three parameters $SF_{dmin}$ and $SF_{emin}$ and $SF_{emax}$ are fixed and when SF is varying, it is possible to represent the discontinuous OVSF codes given by formula (4) by a binary tree similar to the classic OVSF tree, and to number them in the same way. Thus, the discontinuous OVSF code with number n and spreading factor SF in the discontinuous spreading mode set by the values $SF_{dmin}$, $SF_{emin}$ and $SF_{emax}$ is denoted $D_{ch,SF,n}$, with $0 = n < SF$. The values of the parameters $SF_{dmin}$, $SF_{emin}$ and $SF_{emax}$ are not indicated in the notation so as not to overload it. Such a binary tree is shown in Fig. 9. In this figure $SF_{dmin}=4$, $SF_{emin}=8$ and $SF_{emax}=32$. This tree is referenced 900 on the figure.

By definition, $D_{ch,1,0} = [1]$ is the code found at the root of the tree, that is to say for SF=1.

For the codes whose spreading factor is in the interval [1, $SF_{dmin}$[, referenced 904, each code D has as child codes [1 0]⊗D for the upper branch and [0 1]⊗D for the lower branch, that is to say:

$$\begin{matrix} \forall SF \in \left\{1,2,4,\cdots,\dfrac{SF_{d\,min}}{2}\right\} \\ \forall n \in \left\{0,1,\cdots,SF-1\right\} \end{matrix}, \begin{cases} D_{ch,2\cdot SF,2\cdot n} = \begin{bmatrix}1 & 0\end{bmatrix} \otimes D_{ch,SF,n} \\ D_{ch,2\cdot SF,2\cdot n+1} = \begin{bmatrix}0 & 1\end{bmatrix} \otimes D_{ch,SF,n} \end{cases}$$

For the codes whose spreading factor is in the interval [$SF_{dmin}$,$SF_{dmin} \cdot SF_{emax}$[, referenced 906, each code D has as child codes [1 1]⊗D for the upper branch and [1 -1]⊗D for the lower branch, that is to say:

$$\begin{matrix} \forall SF \in \left\{SF_{d\,min},2\cdot SF_{d\,min},\cdots,\dfrac{SF_{d\,min} \cdot SF_{e\,max}}{2}\right\} \\ \forall n \in \left\{0,1,\cdots,SF-1\right\} \end{matrix}, \begin{cases} D_{ch,2\cdot SF,2\cdot n} = \begin{bmatrix}1 & 1\end{bmatrix} \otimes D_{ch,SF,n} \\ D_{ch,2\cdot SF,2\cdot n+1} = \begin{bmatrix}1 & -1\end{bmatrix} \otimes D_{ch,SF,n} \end{cases}$$

Finally, for the codes whose spreading factor is in the interval [$SF_{dmin} \cdot SF_{emax}$, 256[, referenced 908, each code D has as child codes [0 1]⊗D for its upper branch and [1 0]⊗D for its lower branch, that is to say:

$$\begin{matrix} \forall SF \in \left\{SF_{d\,min} \cdot SF_{e\,max},2\cdot SF_{d\,min} \cdot SF_{e\,max},\cdots,256\right\} \\ \forall n \in \left\{0,1,\cdots,SF-1\right\} \end{matrix}, \begin{cases} D_{ch,2\cdot SF,2\cdot n} = \begin{bmatrix}1 & 0\end{bmatrix} \otimes D_{ch,SF,n} \\ D_{ch,2\cdot SF,2\cdot n+1} = \begin{bmatrix}0 & 1\end{bmatrix} \otimes D_{ch,SF,n} \end{cases}$$

It is to be noted that, the minimum spreading factor being $SF_{dmin} = SF_{dmin} \cdot SF_{emin}$, the only utilisable codes are represented by the interval referenced 910.

The binary tree 900 allows to define the orthogonality in the wide meaning as in the classic OVSF tree, meaning that two codes are orthogonal if and only if neither of the two is the ancestor of the other or equal to the other.

By restricting oneself to the codes given by formula (4) and illustrated by such a tree, the following advantages are obtained:

- The reduction of the transmission energy per spread symbol resulting from the utilisation of the discontinuous OVSF code is always at least $1/SF_{dmin}$;
- The utilisation of elementary factors [1 0] and [0 1] at the root of the tree (interval 904) guarantees that there is no more than one non zero chip among all the $SF_{dmin}$ chips. In addition, the zero chips issuing from these elementary factors are uniformly distributed and thus the spread signal is not blocking for the other signals on the uplink;
- by taking for example an effective spreading factor $SF_{emin}$ equal to 4, a good operation of receivers of the RAKE type which carry out equalisation of the physical channels, that is suppression of intersymbol interference at the same time as spectrum despreading, is guaranted;
- the product $SF_{emax} \cdot SF_{dmin}$ is generally equal to the greatest spreading factor authorised on the uplink, that is to say 256; however, by taking $SF_{emax} \cdot SF_{dmin} < 256$ for a channel with variable rate on the uplink, it is possible to simplify the second despreading of a hierarchical despreading by despreading by a discontinuous OVSF code rather than by a classic OVSF code. It is to be recalled that, for a despreading by a discontinuous OVSF code, with equal spreading factor, there are fewer additions to be carried out per symbol.

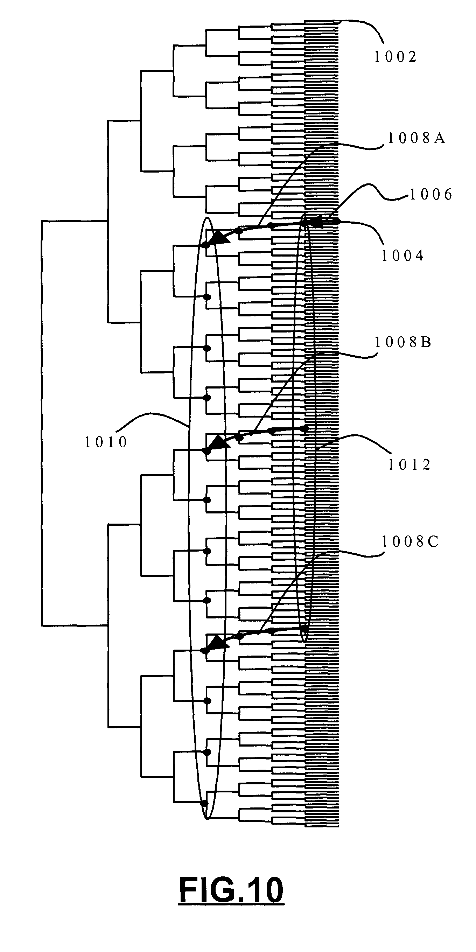

Fig. 10, to be compared with Fig. 4, illustrates the utilisation of discontinuous OVSF codes in a discontinuous spreading mode for a dedicated radio link when the composite channel rate increases gradually. In this example, it is assumed that $SF_{dmin} = 4$, $SF_{emin} = 4$ and $SF_{emax} = 32$. The DPCCH channel is at constant rate and uses the code $D_{ch,256,0}$ referenced 1002. For the lowest rate, there is a single DPDCH channel using the code $D_{ch,256,256/SF_{dmin}}$, that is for the example given in Fig. 10 the code $D_{ch,256,64}$ referenced 1004. When the rate increases, the spreading factor SF of the DPDCH channel is divided by two a first time, and then this operation is repeated at the most

$$\log_2\left(\frac{256}{SF_{dmin} \cdot SF_{emax}}\right)$$

times as the rate increases. In the example given in Fig. 10, this division is carried out a single time

$$\left(\log_2\left(\frac{256}{SF_{dmin} \cdot SF_{emax}}\right) = 1\right),$$

and then the code $D_{ch,128,32}$ is used as shown by the arrow referenced 1006.

If the rate increases further, the number of DPDCH channels is increased by using at each time the I phase of a new code from among the following codes

$$\left\{D_{ch,(SF_{dmin} \cdot SF_{emax}), k \cdot SF_{emax}}\right\}_{k \in \{1,2,\cdots,SF_{dmin}-1\}}$$

In the example given in Fig. 10, the possible codes are the three codes represented by a point in the ellipse referenced 1012, that is to say:

$$\{D_{ch,128,k.32}\}_{k \in \{1,2,3\}}$$

that is: $\{D_{ch,128,32}, D_{ch,128,64}, D_{ch,128,32}\}$

The reason why it is possible to use several codes simultaneously on the same phase is that the non zero chips of any one of the codes never coincides with the non zero chips of any one of the other codes. There is therefore no degradation of the peak to average radio-frequency power ratio but on the contrary an improvement of it.

When all these codes are used and that the rate has to be further increased, then the spreading factor of each of these codes is divided by two at the most

$$\log_2\left(\frac{SF_{emax}}{SF_{emin}}\right)$$

times. Thus for a given spreading factor SF, such as $\frac{SF}{SF_{dmin}} \in \{SF_{emin}, 2 \cdot SF_{emin}, \cdots, SF_{emax}\}$, the following $SF_{dmin}$-1 codes are used simultaneously:

$$\left\{D_{ch,SF,(k \cdot /SF_{d\,min})}\right\}_{k \in \{1,2,\cdots,SF_{d\,min}-1\}}$$

In Fig. 10, the reduction of the spreading factor consists of following in parallel the three arrows referenced 1008A, 1008B and 1008C.

When one arrives at the spreading factor $SF_{min} = SF_{dmin} \cdot SF_{emin}$, the spreading factor cannot be reduced any more. If the rate has to be further increased, then the Q phase of any code already assigned whose Q phase is not already used, is used. If, for all the codes allocated, the I and Q phases are used, then the I phase of a new code, not yet assigned, in the following set is used:

$$\left\{D_{ch,(SF_{d\,min} \cdot SF_{e\,min}),n}\right\}_{n \in \{SF_{e\,min}, SF_{e\,min}+1, \cdots, SF_{d\,min} \cdot SF_{e\,min}-1\}}$$

In the example of Fig.10, this set comprises 12 codes, three of which are already allocated, marked by a point in the ellipse referenced 1010, that is to say:

$$\{D_{ch,16,n}\}_{n \in \{4,5,...,15\}}$$

that is: $\{D_{ch,16,4}$ , $D_{ch,16,5}$ , $D_{ch,16,6}$ , $D_{ch,16,7}$ , $D_{ch,16,8}$ , $D_{ch,18,9}$, $D_{ch,16,10}$ , $D_{ch,16,11}$ , $D_{ch,16,12}$ , $D_{ch,16,13}$ , $D_{ch,16,14}$ , $D_{ch,16,15}\}$

When all the codes of this set are allocated and the I and Q phases of each of them are used, the rate cannot be increased further.

By proceeding in this way, for each rate of the normal spreading mode, a rate which is at least equal in the discontinuous spreading mode can be obtained. In addition, the known advantage that the peak to average radio-frequency power ratio is minimised, is preserved.

It is to be noted that it is also possible to follow in parallel only two of the arrows 1008A, 1008B, 1008C, for example the arrows 1008A and 1008C. The code at the tip of the third arrow, in this case $D_{ch,16,32}$ at the tip of 1008B, is used on the I phase when the minimum spreading factor $SF_{min}$ is reached and when the rate of the composite channel has to be further increased. It is only after that, to increase the rate further, that the other elements of

$$\left\{D_{ch,(SF_{d\,min} \cdot SF_{e\,min}),n}\right\}_{n \in \{SF_{e\,min}, SF_{e\,min}+1, \cdots, SF_{d\,min} \cdot SF_{e\,min}-1\}}$$

are used and only beginning to use a new code when the two phases of the codes already used are already used. By proceeding in this way, all the rates possible in normal mode can be obtained in discontinuous mode.

According to a preferred embodiment of the invention, the order of the discontinuous OVSF codes of the discontinuous spreading mode allocated to the different physical channels is modified by a permutation which varies in a specific and pseudo-random way in each mobile station operating according to a discontinuous spreading mode. The spreading is then carried out with permuted discontinuous OVSF codes.

In the absence of such a permutation, an unfavourable situation occurs if two mobile stations accidentally use the same discontinuous OVSF code at the same time and if their chips of the same order modulo 256 in the same radio frame are received simultaneously for significant propagation paths. These mobile stations interfere with each other in a bigger manner since the base station is then receiving simultaneously non zero chips from each of them. On the contrary, a favourable situation is produced when a zero chip from one of the two mobile stations is received simultaneously with a non zero chip from the other. By permuting the codes in a specific way in each of the mobile stations in discontinuous mode, and by varying this permutation with time in a specific way for each mobile station, the probability of such situations over the long term is not reduced but, on the other hand, it guarantees that the unfavourable situation or the absence of a favourable situation does not last. Another advantage of this permutation is, that in its absence, the variation of the signal envelope would be periodical and there could therefore be a problem of electromagnetic compatibility from the power transmission concentrated on the frequency corresponding to the period of variation of the envelope. This problem can be solved by a pseudo-random permutation of the codes with time.

A permutation step is then added to the modulation method of the invention. This step consists of carrying out at least one permutation between at least two spectrum spreading codes from a list of codes, each permutation being carried out in a pseudo-random fashion according to a predetermined period, called permutation period. The list of spreading codes is possibly structured in a binary tree. In this preferred embodiment, after the permutation step, a step for selecting a spectrum spreading code to assign in said permuted list, is carried out. This selection of a spectrum spreading code to be assigned is carried out in function of an order number. The order number corresponds, for example, to a spreading factor SF and a position number n in the list restricted to the codes with spreading factor SF. The order number (SF,n) thus corresponds to the code number in the absence of permutation. The selected spreading code is then assigned to a physical channel. After each assignment step, the generation step stops generating the spectrum spreading code assigned before the permutation under consideration, and generates the spectrum spreading code assigned after the permutation under consideration.

Thus, the permutation of discontinuous OVSF codes must be such that each discontinuous OVSF code is replaced by a discontinuous OVSF code with the same spreading factor. It is thus necessary to define a permutation, noted $\sigma_{SF}$, for each spreading factor SF. The function of this permutation is to replace, for every $n \in \{0,1,..., SF\text{-}1\}$, the code $D_{ch,SF,n}$ by the code $D_{ch,SF,k}$ where $k = \sigma_{SF}(n)$. As SF is greater than or equal to $SF_{min} = SF_{dmin} \cdot SF_{emin}$, it is enough to define the permutations $\sigma_{SF}$ for every $SF \in \{SF_{min}, 2 \cdot SF_{min}, ...., 256\}$.

Besides, in order to allow hierarchical despreading, it is necessary for the permutation to preserve the binary tree structure. In other terms, if three codes A, B and C are such that B and C are the child codes of A, then the permutation replaces the codes A, B and C respectively by codes D, E and F such that E and F are the two child codes of D. The relations of parenthood between codes in the binary tree 900 are thus preserved if the permutation verifies the following relationship:

$$\left.\begin{array}{l} \forall SF \in \{SF_{min}, 2 \cdot SF_{min}, \cdots, 128\} \\ \forall n \in \{0,1,\cdots, SF-1\} \end{array}\right) \sigma_{SF}(n) = \left\lfloor \frac{\sigma_{2 \cdot SF}(2 \cdot n)}{2} \right\rfloor = \left\lfloor \frac{\sigma_{2 \cdot SF}(2 \cdot n + 1)}{2} \right\rfloor \qquad (5)$$

where $\lfloor x \rfloor$ indicates the biggest integer number less than or equal to x.

It results from formula (5) that it is enough to know $\sigma = \sigma_{256}$ and all the other permutations $\sigma_{SF}$ can be deduced from the relation below:

$$\forall n \in \{0,1,\cdots, SF-1\} \sigma_{SF}(n) = \left\lceil \frac{SF \cdot \sigma\left(\dfrac{256 \cdot n}{SF}\right)}{256} \right\rceil \qquad (6)$$

To summarise, it is necessary that the permutation $\sigma_{256} = \sigma$ and the other permutations $\sigma_{SF}$ deduced from $\sigma_{256}$ by formula (6) verify formula (5).

Typically, the selection of the code and its assignment are repeated every T chips, where T is a multiple of the biggest spreading factor of the uplink, that is 256. Hereinafter T is referred to as selection period. More generally, the permutation $\sigma$ varies every $\tau$ chips, where $\tau$ equals T or is a divisor of it (for example $\tau$ equals one chip).

Below, as an example, a method is given allowing a sequence of permutations $\{\sigma_{SF}, \sigma_{2SF}, ... \sigma_{256}\}$ to be generated according to the invention.

First of all, the permutation $\sigma_{SF_{min}}$ is generated. For example, a pseudo-random variable r with a value in $\{0,1,..., SF_{min}\text{-}1\}$ is considered. This variable takes a new pseudo-random value every T chips.

The permutation $\sigma_{SF_{min}}$ is defined by the following formula

$$\forall n \in \{0,1,\cdots, SF_{min}\text{-}1\} \sigma_{SF_{min}}(n) = (n+r) \bmod SF_{min} \qquad (7)$$

where "a mod b" indicates the remainder of the Euclidian division of a by b.

As a variant, $\sigma_{SF_{min}}$ is defined by the following formula:

$$\forall n \in \{0,1,\cdots, SF_{min}\text{-}1\} \ \sigma_{SF_{min}}(n) = n \text{ xor } r \qquad (8)$$

where "a xor b" indicates the operation consisting of adding, modulo 2, each bit of a to the bit of b that has the same weight.

Next,

$$\log_2\left(\frac{256}{SF_{min}}\right)$$

random variables, indicated hereinafter by $S_{SF_{min}}$, $S_{2 \cdot SF_{min}}$, $S_{4 \cdot SF_{min}}$, ..., $S_{128}$, are considered such that for every SF in $\{SF_{min}, 2 \cdot SF_{min}, ..., 128\}$, $S_{SF}$ shall be of values in $\{0,1,2,..., 2^{SF}-1\}$. $\sigma_{2 \cdot SF}$ can then be defined, for every SF in $\{SF_{min}, 2 \cdot SF_{min}, ..., 128\}$, as a function of $\sigma_{SF}$ and $S_{SF}$ in the following manner:

$$\forall n \in \{0,1,\cdots,SF-1\}\begin{cases}\begin{cases}\sigma_{2 \cdot SF}(2n) = 2\sigma_{SF}(n)\\\sigma_{2 \cdot SF}(2n+1) = 2\sigma_{SF}(n)+1\end{cases} \text{if } b_n = 0\\\begin{cases}\sigma_{2 \cdot SF}(2n) = 2\sigma_{SF}(n)+1\\\sigma_{2 \cdot SF}(2n+1) = 2\sigma_{SF}(n)\end{cases} \text{if } b_n = 1\end{cases}$$

where $b_{SF-1}b_{SF-2}...b_1b_0$ is, in the formula above, the binary representation of $S_{SF}$, that is:

$$s_{SF} = \sum_{n=0}^{n=SF-1} b_n \cdot 2^n.$$

These examples illustrate that the binary tree 900 of the discontinuous OVSF codes can be permuted depending on the composition of elementary permutations of one of the two following types:

- A permutation of nodes with spreading factor $SF_{min}$; the sub-tree of each node is then displaced by the permutation at the same time as the node.
- For any spreading factor SF greater than or equal to $SF_{min}$ and strictly less than 256, and for any node in the tree with this spreading factor, a permutation consisting of transposing the two childs of this node, together with the corresponding sub-trees.

According to another embodiment of the invention, the definition of the permutations $\sigma_{SF}$ is simplified in the following way: the variables $S_{SF}$ have two possible values, 0 or $2^{SF}-1$, instead of $2^{SF}$ possible values comprised between 0 and $2^{SF}-1$. Therefore one binary random variable $p_{SF}$ where the value is in $\{0,1\}$, can be defined such that $s_{SF} = p_{SF} \cdot (2^{SF}-1)$. If p designates the random variable with values in

$$\left\{0,1,...,\frac{128}{SF_{min}}-1\right\}$$

the binary representation of which is $p_{128}p_{64}...p_{SF_{min}}$, p equals:

$$p = \sum_{n=\log_2(SF_{min})}^{n=7} p_{2^n} \cdot \frac{2^n}{SF_{min}}$$

The permutation $\sigma$ is then defined as follows:

$$\forall n \in \{0,1,\cdots,255\} \ \sigma(n) = SF_{min} \cdot \sigma_{SF_{min}} (n \ div \ SF_{min})+((n \ mod SF_{min}) xor \ p)$$

where "a div b" indicates the quotient of the Euclidian division of a by b. When the permutation $\sigma_{SF_{min}}$ is defined by Formula (8), $\sigma(n)$ equals:

$$\forall n \in \{0,1,\cdots,255\} \ \sigma(n)=n \ xor(r \cdot SF_{min}+p)$$

Therefore it is enough to generate a single random variable u with a value in {0,1,...,255} corresponding to $r \cdot SF_{min}+p$, then:

$$\forall n \in \{0.1,\cdots,255\} \sigma(n)=n \ xor \ u$$

The generation of permutations is thus carried out very simply by a generator of random numbers and a logic gate of the XOR type.

In certain cases, it is possible to have a selection period T specific to each physical channel lower than 256 chips. In fact, assume that $T_A$ and $T_B$ are the selection periods of the spreading codes for the two physical channels A and B. As a simplification, the periods $T_A$ and $T_B$ are expressed in numbers of chips. The duration of these two periods is less than or equal to 256 chips. If the permutation $\sigma$ varies every $\tau$ chips, then $\tau$ must be a divisor of $T_A$ and $T_B$ and the spreading code resulting from the permutation $\sigma$ must only vary every $T_A$ or $T_B$ chips respectively for the physical channels A and B.

The selection period T for a spreading code must be a multiple of its spreading factor SF. Thus, in practice, the selection period $T_C$ of the spreading code of the DPCCH channel can be taken equal to 256 and that, $T_D$, of the DPDCH channels equal to $SF_{max}$, where $SF_{max}$ is the greatest spreading factor used by the mobile station under consideration for the DPDCH type physical channels and the radio link under consideration.

As a variant, the selection period $T_D$ for the DPDCH channels can be taken equal to the spreading factor SF of the corresponding spreading codes of the current radio frame or to a multiple of this. Thus, by taking $T_D = SF$, when the spreading factor SF varies from one radio frame to another, the selection period $T_D$ varies in the same way. However, by taking a non-constant period $T_D$, hierarchical despreading becomes impossible.

It is then possible to vary $\sigma$ every $\tau = T_D$ chips, on condition that $\sigma(0)$ only varies every $T_C = 256$ chips.

Such a sequence of permutations can be built in the following way. First of all, $\sigma_{SF_{min}}$ is generated such that $\sigma_{SF_{min}}$ (0) only varies every $T_C = 256$ chips and that $\sigma_{SF_{min}}$ (1), $\sigma_{SF_{min}}$ (2), ..., $\sigma_{SF_{min}}$ ($SF_{min}$-1) varies every $T_D$ chips. This can be done by composing two permutations: a first permutation $\xi$ of {0,1,2,...,$SF_{min}$-1} varying every $T_D$ chips such that $\xi(0) = 0$ and a second permutation $\zeta$ of {0,1,2,...,$SF_{min}$-1} varying every $T_C = 256$ chips. The permutation $\sigma_{SF_{min}}$ is such that:

$$\forall n \in \{0,1,\cdots,SF_{min}-1\} \ \sigma_{SF_{min}}(n)=\zeta(\xi(n))$$

For example, the permutation $\xi$ can be generated from a random variable v with a value in {0,1,..., $SF_{min}$-2} as follows:

$$\xi(0)=0$$

$$\forall n \in \{1,2,\cdots,SF_{min}-1\} \ \xi(n) =1 +((n + v) mod(SF_{min} - 1)$$

The other permutations $\sigma_{SF}$ can be generated by varying the random variables $S_{SF}$ every $T_D$ chips and by ensuring that the least significant bit of the random variables $S_{SF}$ only varies every $T_C= 256$ chips.

Finally, it is to be noted that the inventive method is applicable to every channel on the uplink using spreading codes in the present state of the art, and not only to the DPCCH and DPDCH channels. In fact, the PRACH channel (Physical Random Access Channel) is divided into a message part control part similar to the DPCCH channel and a message part data part similar to a DPDCH channel. The message part control part does not necessarily use the code $C_{ch,256,0}$ in continuous spreading mode, but can also use every code $C_{ch,256,n}$ with n∈{0, 16, 32, 48, 64, 80, 96, 112, 128, 144, 160, 176, 192, 208, 224, 240}. Therefore, in the case where it will be desirable to permute the discontinuous OVSF codes for the PRACH channel more often than every 256 chips, which would be possible if the maximum spreading factor used on the message part data part of the PRACH channel was systematically less than 256, it would be necessary to take into account this difference in order to only permute the message control part code every 256 chips at the most.

Moreover, since the PRACH channel is a common channel, utilisation of discontinuous OVSF codes cannot therefore be a radio link parameter based on a measurement feedback of the mobile station, and on a network command. In the case of a PRACH channel, utilisation of the discontinuous spreading mode according to the invention is made on the initiative of the mobile station and not on a command from the network. The mobile station measures the reception level of a pilot channel broadcast by the network. From this reception level and a threshold parameter broadcast by the network, the mobile station decides whether it should use the discontinuous spreading mode or the normal spreading mode. On the other hand, several PRACH channels exist which are distinguished either by their scrambling code or by their access time slot number.

These PRACH channels are classified into two sets, one using the normal spreading mode and the other the discontinuous spreading mode. The mobile stations are informed of the division of the PRACH channels in these two sets by a message broadcast by the network. Thus, according to whether a mobile station decides to transmit in normal spreading mode or in discontinuous spreading mode on a PRACH channel, it will choose the PRACH channel in the first or in the second set.

It is to be noted that, in everything above, 256 is the maximum value of the spreading factor of the 3$^{rd}$ generation system of the 3GPP group. The invention can be applied to a system whose maximum spreading factor is different from 256. In fact, it is enough in the above description, to substitute the value 256 by the maximum spreading factor value in the system under consideration.

Finally, it is to be noted that in the case where $SF_{emax} \cdot SF_{dmin} = 256$, the spreading of a physical channel by a discontinuous OVSF code with spreading factor SF can be described simply as the spreading by an OVSF code of spreading factor $SF/SF_{dmin}$, followed by the insertion of $SF_{min}-1$ zero chips between each chip. In the case of a permutation of discontinuous OVSF codes, the number of inserted zero chips is variable but has a mean value of $SF_{min}-1$.

**Claims**

1. Method for modulating at least one symbol to be transmitted from a transmitter entity towards at least one receiver entity, said at least one symbol being issued from at least one physical channel, said method comprising :

   - a step for assigning a spectrum spreading code to each of said at least one physical channel,
   - a step for generating at least one spectrum spreading code, said at least one spectrum spreading code being taken from a set of orthogonal spreading codes with variable spreading factor, and
   - a step for multiplying each of said at least one symbol of each of said at least one physical channel by the generated spectrum spreading code assigned to the physical channel under consideration,

   **characterised in that** said step for generating at least one spectrum spreading code consists of generating at least one spectrum spreading code comprising a sequence of chips wherein at least one chip has the value 0, each of the chips with value 0 included within a spectrum spreading code thus generated, then called discontinuous spectrum spreading code, creating, for the physical channel to which said discontinuous spectrum spreading code is assigned, a transmit power approaching zero for the corresponding transmitted signal.

2. Method according to Claim 1, **characterised in that** said sequence of chips further comprises chips with value -1 or +1.

3. Method according to any of Claims 1 and 2, **characterised in that** said step for assigning a spectrum spreading code to each of said at least one physical channel precedes said step for generating at least one spectrum spreading code.

4. Method according to any of Claims 1 to 3, **characterised in that** the spectrum spreading codes with $2^N$ chips are defined by row vectors of a matrix with $4^N$ rows and $2^N$ columns resulting from the Kronecker product $H \otimes H \otimes \ldots \otimes H$ comprising N factors H, $\otimes$ being the Kronecker product operator and where

$$H = \begin{bmatrix} 1 & 1 \\ 1 & -1 \\ 1 & 0 \\ 0 & 1 \end{bmatrix}.$$

5. Method according to any of Claims 1 to 3, **characterised in that** the spectrum spreading codes with $2^N$ chips are defined by row vectors of a matrix with $2^N$ rows and $2^N$ columns resulting from the Kronecker product $H_1 \otimes H_2 \otimes H_3$, $\otimes$ being the Kronecker product operator and where

- $H_1$ is equal to the result of the Kronecker product

$$\begin{bmatrix} 1 & 0 \\ 0 & 1 \end{bmatrix} \otimes \ldots \otimes \begin{bmatrix} 1 & 0 \\ 0 & 1 \end{bmatrix}$$

comprising a number I of factors

$$\begin{bmatrix} 1 & 0 \\ 0 & 1 \end{bmatrix},$$

- $H_2$ is equal to the result of the Kronecker product

$$\begin{bmatrix} 1 & 1 \\ 1 & -1 \end{bmatrix} \otimes \ldots \otimes \begin{bmatrix} 1 & 1 \\ 1 & -1 \end{bmatrix}$$

comprising a number J of factors

$$\begin{bmatrix} 1 & 1 \\ 1 & -1 \end{bmatrix},$$

- $H_3$ is equal to the result of the Kronecker product

$$\begin{bmatrix} 1 & 0 \\ 0 & 1 \end{bmatrix} \otimes \ldots \otimes \begin{bmatrix} 1 & 0 \\ 0 & 1 \end{bmatrix}$$

comprising a number K of factors

$$\begin{bmatrix} 1 & 0 \\ 0 & 1 \end{bmatrix},$$

and
- N is equal to the sum of the respective numbers I, J and K of product factors whose results are said matrices $H_1$, $H_2$ and $H_3$.

**6.** Method according to any of Claims 3 to 5, **characterised in that**, at least two spectrum spreading codes being included within a list of spectrum spreading codes possibly structured according to a so-called tree structure, said method comprising a step for selecting a spectrum spreading code to be assigned within said list, the selection of said spectrum spreading code to be assigned being carried out according to at least one order number (SF,n) specific to the physical channel to which said selected spectrum spreading code is to be assigned, and a step for permuting said at least two spectrum spreading codes within said list, said permutation step consisting of carrying out at least one permutation of said at least two spectrum spreading codes within said list, each of said at least one permutation being carried out in a pseudo-random way according to a predetermined period, called permutation period (τ),

**in that** said selection and assignment steps are repeated after at least one permutation,

and **in that**, after each of said assignment steps, said generation step stops to generate the spectrum spreading code assigned before the permutation under consideration, and generates the spectrum spreading code assigned after the permutation under consideration.

**7.** Method according to Claim 6, **characterised in that**, said selection and assignment steps being repeated according to a predetermined period, called selection period (T), said selection period being a multiple of said permutation period (τ), said selection period corresponds to a number (T) of chips representing the maximum number of chips within a spectrum spreading code.

**8.** Method according to any of Claims 6 and 7, **characterised in that**, the number of chips per symbol (SF) being constant, for each of said at least one physical channel to which is assigned a spectrum spreading code, during a period of a radio frame, said permutation period corresponds to a number (τ) of chips which is a divisor of the minimum number of chips within a symbol, said minimum number being considered for all of said at least one physical channel.

**9.** Method according to Claim 8, **characterised in that** said selection and assignment steps are repeated according to a predetermined period, called selection period (T), corresponding to a multiple of said number of chips per symbol (SF) during said period of a radio frame.

**10.** Method according to any of Claims 6 to 9, the spreading factor of a spectrum spreading code corresponding to the number of chips included within this spectrum spreading code, **characterised in that** said permutation step consists of substituting for said at least two spectrum spreading codes within said list, a spectrum spreading code with the same spreading factor.

**11.** Method according to any of Claims 6 to 10, **characterised in that**, said list being structured according to a binary tree structure, said permutation step preserves said binary tree structure.

**12.** Method according to any of Claims 1 to 11, **characterised in that** it is implemented in said transmitter entity after the reception by said transmitter entity of a request message, called first request message, transmitted by said at least one receiver entity.

**13.** Method according to any of Claims 1 to 12, **characterised in that** it is deactivated after the reception by said transmitter entity of a request message, called second request message, transmitted by said at least one receiver entity.

**14.** Method according to any of Claims 1 to 11, **characterised in that** it is implemented on initiative of said transmitter entity.

**15.** Method according to any of Claims 1 to 13, **characterised in that** said transmitter entity transmits to said at least one receiver entity at least one message, called transmit power information message, comprising at least one measurement result of the transmit power of the corresponding signal transmitted for a predetermined transmission period.

**16.** Method according to Claim 15, **characterised in that** said transmit power information message is transmitted with a predetermined period, called information period.

**17.** Method according to any of Claims 15 and 16, itself dependent on Claim 12, **characterised in that** said first request message is transmitted when said measurement result of the transmit power of the signal transmitted is lower than a predetermined threshold, called first threshold.

**18.** Method according to any of Claims 15 to 17, itself dependent on Claim 13, **characterised in that** said second request message is transmitted when said measurement result of the transmit power of the signal transmitted is higher than a predetermined threshold, called second threshold.

**19.** Method according to any of Claims 1 to 18, **characterised in that** said discontinuous spectrum spreading code is defined with at least three parameters, a first parameter $SF_{dmin}$ representative of the minimum value of a discontinuity factor of the discontinuous spectrum spreading code, said discontinuity factor corresponding to the ratio of the total number of chips to the number of chips with non zero value, a second parameter $SF_{emin}$ representative of the minimum value of an effective spreading factor of the discontinuous spectrum spreading code, said effective spreading factor corresponding to the number of chips with non zero value within the discontinuous spectrum spreading code, a third parameter $SF_{emax}$ representative of the maximum value of said effective spreading factor.

**20.** Device for modulating at least one symbol to be transmitted from a transmitter entity towards at least one receiver entity, said at least one symbol being issued from at least one physical channel, said device comprising:

- means for assigning a spectrum spreading code to each of said at least one physical channel,
- means for generating at least one spectrum spreading code, said at least one spectrum spreading code being taken from a set of orthogonal spreading codes with variable spreading factor, and
- means for multiplying each said at least one symbol of each said at least one physical channel by the generated spectrum spreading code assigned to the physical channel under consideration,

**characterised in that** said means for generating at least one spectrum spreading code generate at least one spectrum spreading code comprising a sequence of chips wherein at least one chip has the value 0, each of the chips of value 0 included within a spectrum spreading code thus generated, then called discontinuous spectrum spreading code, creating, for the physical channel to which said discontinuous spectrum spreading code is assigned, a transmit power approaching zero for the corresponding transmitted signal.

**21.** A mobile station comprising means for transmitting at least one physical channel, each of said at least one physical channel carrying at least one symbol, **characterised in that** it comprises a modulation device according to Claim 20.

**22.** Method for demodulating at least one symbol received by a receiver entity, said at least one symbol being issued from at least one modulated physical channel, said method comprising:

- a step for assigning a spectrum despreading code to each of said at least one modulated physical channel, said spectrum despreading code corresponding to the spectrum spreading code being used for modulating a physical channel to be modulated and to be transmitted,
- a step for generating at least one spectrum despreading code, said at least one spectrum despreading code being taken from a set of orthogonal despreading codes with variable despreading factor, and
- a step for correlating each of said at least one symbol of each of said at least one modulated physical channel, said correlation step consisting of correlating the symbol under consideration with the generated spectrum despreading code assigned to the modulated physical channel under consideration,

**characterised in that** said step for generating at least one spectrum despreading code consists of generating at least one spectrum despreading code comprising a sequence of chips wherein at least one chip has the value 0.

**23.** Method according to Claim 22, the despreading factor of a spectrum despreading code corresponding to the number of chips included within this spectrum despreading code, said at least one modulated physical channel comprising at least one modulated physical channel with variable spreading factor, the spreading factor of a modulated physical channel corresponding to the number of chips per symbol of said modulated physical channel, the spectrum despreading code to be assigned to each of said at least one modulated physical channel with variable spreading factor being selected from within a list assigned to said modulated physical channel with variable spreading factor, each of said at least one list comprising a unique spectrum despreading code for each of said possible spreading factors for the modulated physical channel to which the list under consideration is assigned, **characterised in that**, each of the spectrum despreading codes of each of said at least one list being the result of the Kronecker product of a factor (V) common to all of the spectrum despreading codes of the list under consideration, called first factor, and a factor (U) specific to the spectrum despreading code under consideration, called second factor,

said method comprises for each of said at least one list :

- a step for generating said first factor (V),
- a step for correlating, called first correlation step, at least one time segment relative to each of said at least one symbol of said at least one modulated physical channel by said generated first factor, a sequence of intermediary chips for each of said at least one symbol being thus obtained, each of the intermediary chips resulting from said correlation,
- a step for determining said second factor, and
- a step for correlating, called second correlation step, the corresponding sequence of intermediary chips obtained with said second factor, for each of said at least one symbol.

24. Device for demodulating at least one symbol received by a receiver entity, said at least one symbol being issued from at least one modulated physical channel, said device comprising:

- means for assigning a spectrum despreading code to each of said at least one modulated physical channel, said spectrum despreading code corresponding to the spectrum spreading code being used for modulating a physical channel to be modulated,
- means for generating at least one spectrum despreading code, said at least one spectrum despreading code being taken from a set of orthogonal despreading codes . with variable despreading factor, and
- means for correlating each of said at least one symbol of each of said modulated physical channel with the generated spectrum despreading code assigned to the modulated physical channel under consideration,

**characterised in that** said means for generating at least one spectrum despreading code generate at least one spectrum despreading code comprising a sequence of chips wherein at least one chip has the value 0.

25. A base station comprising means for receiving at least one modulated physical channel, each of said at least one modulated physical channel carrying at least one symbol, **characterised in that** it comprises a demodulation device according to Claim 24.

102

104

Coding
Interleaving
multiplexing

modulation

RF

transport
channels

# FIG.1

## FIG.2

$C_{ch,8,0} = (+ + + + + + + +)$

$C_{ch,4,0} = (+ + + +)$

$C_{ch,8,1} = (+ + + + - - - -)$

$C_{ch,2,0} = (+ +)$

$C_{ch,8,2} = (+ + - - + + - -)$

$C_{ch,4,1} = (+ + - -)$

$C_{ch,8,3} = (+ + - - - - + +)$

$C_{ch,1,0} = (+)$

$C_{ch,8,4} = (+ - + - + - + -)$

$C_{ch,4,2} = (+ - + -)$

$C_{ch,8,5} = (+ - + - - + - +)$

$C_{ch,2,1} = (+ -)$

$C_{ch,8,6} = (+ - - + + - - +)$

$C_{ch,4,3} = (+ - - +)$

$C_{ch,8,7} = (+ - - + - + + -)$

# FIG.3

**FIG.4**

504

506

e'(t) →⊗→ integrator → s'(t)

OVSF generator ← Time control generator

510

512

# FIG.5

```
                              + + + + + + + +
              ┌─────────┐     + + + + - - - -
              │ + + + + │     + + + + O O O O
              └─────────┘     O O O O + + + +
                              + + - - + + - -
              ┌─────────┐     + + - - - - + +
              │ + + - - │     + + - - O O O O
   ┌────┐     └─────────┘     O O O O + + - -
   │ ++ │                     + + O O + + O O
   └────┘     ┌─────────┐     + + O O - - O O
              │ + + O O │     + + O O O O O O
              └─────────┘     O O O O + + O O
                              O O + + O O + +
              ┌─────────┐     O O + + O O - -
              │ O O + + │     O O + + O O O O
              └─────────┘     O O O O O O + +
                              + - + - + - + -
              ┌─────────┐     + - + - - + - +
              │ + - + - │     + - + - O O O O
              └─────────┘     O O O O + - + -
                              + - - + + - - +
              ┌─────────┐     + - - + - + + -
              │ + - - + │     + - - + O O O O
   ┌────┐     └─────────┘     O O O O + - - +
   │ +- │                     + - O O + - O O
   └────┘     ┌─────────┐     + - O O - + O O
              │ + - O O │     + - O O O O O O
              └─────────┘     O O O O + - O O
                              O O + - O O + -
              ┌─────────┐     O O + - O O - +
              │ O O + - │     O O + - O O O O
              └─────────┘     O O O O O O + -
 ┌───┐                        + O + O + O + O
 │ + │        ┌─────────┐     + O + O - O - O
 └───┘        │ + O + O │     O + O + O O O O
              └─────────┘     O O O O + O + O
                              + O - O + O - O
              ┌─────────┐     + O - O - O + O
              │ + O - O │     O + O - O O O O
   ┌────┐     └─────────┘     O O O O + O - O
   │ +O │                     + O O O + O O O
   └────┘     ┌─────────┐     + O O O - O O O
              │ + O O O │     + O O O O O O O
              └─────────┘     O O O O + O O O
                              O O + O O O + O
              ┌─────────┐     O O + O O O - O
              │ O O + O │     O O + O O O O O
              └─────────┘     O O O O O O + O
                              O + O + O + O +
              ┌─────────┐     O + O + O - O -
              │ O + O + │     O + O + O O O O
              └─────────┘     O O O O O + O +
                              O + O - O + O -
              ┌─────────┐     O + O - O - O +
              │ O + O - │     O + O - O O O O
   ┌────┐     └─────────┘     O O O O O + O -
   │ O+ │                     O + O O O + O O
   └────┘     ┌─────────┐     O + O O O - O O
              │ O + O O │     O + O O O O O O
              └─────────┘     O O O O O + O O
                              O O O + O O O +
              ┌─────────┐     O O O + O O O -
              │ O O O + │     O O O + O O O O
              └─────────┘     O O O O O O O +
```

# FIG.6

**FIG.7**

**FIG.8**

**FIG.9**

1002

1008A

1006

1004

1008B

1010

1012

1008C

**FIG.10**

## EUROPEAN SEARCH REPORT

European Patent Office

**Application Number**

EP 01 46 0019

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | "MULTILEVEL MATE PAIR CODE COMPRESSOR FOR CODES EXPANDED BY THE PROCESS OF BUTTING" NTIS TECH NOTES, US DEPARTMENT OF COMMERCE, SPRINGFIELD, VA, US, October 1991 (1991-10), page 778 XP000266999 ISSN: 0889-8464 | 1-3, 12-18, 20-25 | H04J11/00 |
| A | * page 778 * | 4-6,19 | |
| X | US 4 542 515 A (GUTLEBER FRANK S) 17 September 1985 (1985-09-17) * abstract * * column 2, line 52 – column 3, line 7 * | 1-3, 12-18, 20-25 | |
| A | * column 3, line 24 – column 6, line 16 * | 4-6,19 | |
| X | LUPINETTI F ET AL: "TERNARY SEQUENCES FOR SIGNALLING APPLICATIONS" IEEE SOUTHEASTCON CONFERENCE PROCEEDINGS, March 1986 (1986-03), pages 34-37, XP000892748 Richmond, VA, USA * abstract * | 1-3, 12-18, 20-25 | |
| A | * parts I., II. et IV. * | 4-6,19 | TECHNICAL FIELDS SEARCHED (Int.Cl.7) H04J |
| X | SUEHIRO N: "A SIGNAL DESIGN WITHOUT CO-CHANNEL INTERFERENCE FOR APPROXIMATELY SYNCHRONIZED CDMA SYSTEMS" IEEE JOURNAL ON SELECTED AREAS IN COMMUNICATIONS, US, IEEE INC. NEW YORK, vol. 12, no. 5, 1 June 1994 (1994-06-01), pages 837-841, XP000464968 ISSN: 0733-8716 * abstract * | 1-3, 12-18, 20-25 | |
| A | * parts I., II., III., IV. et V.A. * | 4-6,19 | |

-/--

The present search report has been drawn up for all claims

| Place of search | Date of completion of the search | Examiner |
|---|---|---|
| THE HAGUE | 3 July 2001 | Chauvet, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## EUROPEAN SEARCH REPORT

European Patent
Office

**Application Number**

EP 01 46 0019

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | OKAWA K ET AL: "ORTHOGONAL MULTI-SPREADING FACTOR FORWARD LINK FOR COHERENT DS-CDMA MOBILE RADIO" IEEE INTERNATIONAL CONFERENCE ON UNIVERSAL PERSONAL COMMUNICATIONS, US, NEW YORK, IEEE, vol. CONF. 6, 12 October 1997 (1997-10-12), pages 618-622, XP000777896 ISBN: 0-7803-3777-8 * abstract * * part 2.2 * | 1-25 | |

TECHNICAL FIELDS
SEARCHED        (Int.Cl.7)

The present search report has been drawn up for all claims

| Place of search | Date of completion of the search | Examiner |
|---|---|---|
| THE HAGUE | 3 July 2001 | Chauvet, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 01 46 0019

This annex lists the patent family members relating to the patent documents cited in the above-mentioned European search report.
The members are as contained in the European Patent Office EDP file on
The European Patent Office is in no way liable for these particulars which are merely given for the purpose of information.

03-07-2001

| Patent document cited in search report | Publication date | Patent family member(s) | Publication date |
|---|---|---|---|
| US 4542515 A | 17-09-1985 | NONE | |

For more details about this annex : see Official Journal of the European Patent Office, No. 12/82